# EUROPEAN PATENT SPECIFICATION

(11) **EP 2 338 737 B1**
(45) Date of publication and mention of the grant of the patent: **28.11.2012**
(21) Application number: 10380162.7
(22) Date of filing: 23.12.2010
(51) Int. Cl.: B60R 5/04

(54) **Rear articulated parcel shelf for automobiles**
Angelenkte hintere Ablageplatte für Kraftfahrzeuge
Tablette arrière articulé pour véhicule automobile

(30) Priority: 23.12.2009 ES 200930794 U
(43) Date of publication of application: 29.06.2011
(73) Proprietor: Seat, S.A., 08760 Martorell, Barcelona (ES)
(72) Inventor: Herrera Gene, Joaquin, 08760 Martorell Barcelona (ES); Fernández Alba, Manuel, 08760 Martorell Barcelona (ES); Colet Gali, Juan, 08760 Martorell Barcelona (ES)
(74) Representative: Carvajal y Urquijo, Isabel

(56) References cited:
- EP-A1- 0 066 514
- EP-A1- 2 095 997
- DE-A1-102006 047 122
- FR-A1- 2 913 247

## Description

### Field of the invention

The present invention refers to the automotive world and more specifically it refers to a rear articulated parcel shelf which serves as a storage surface and for the closing of the automobile trunk.

The object of the invention is to try to improve the centering of the parcel shelf in the lateral supports between which it is mounted, absorbing the deviations of the body.

### Background of the invention

There are known rear parcel shelves for automobiles having fixed and rotating anchors.

The parcel shelves with rotating anchor have an axis which also serves as fastening means, so that when the parcel shelf is lifted or lowered to load the trunk, the rotation occurs in the anchor, through the articulation axis.

The parcel shelves with fixed anchor do not have any rotating axis, so that when the parcel shelf is lifted or lowered to load the trunk, this parcel shelf is folded by one area, where the material is duly weakened, and so the anchor must be fixed, without allowing any rotation.

For example, document EP 0 066 514 A1 discloses a parcel shelf which has a front panel and a rear panel formed of the same sheet of a thermo-plastic material. A channel-like recess is formed across said sheet to separate the front and rear panels, defining a thin strip which acts as a hinge to fold the parcel shelf.

Document DE 10 2006 047122 A1 discloses a parcel shelf which has a central panel arranged between front and rear panels. The front and rear panels are connected to the central panel by means of notches, defining weakened areas or edges which act as hinges to fold the parcel shelf.

Document EP 2 095 997 A1 also discloses a parcel shelf which has a central panel arranged between front and rear panels. The front and rear panels are connected to the central panel by means of a first and a second hinge. The first hinge comprises two axes of rotation, each one of them having a spring arranged to induce its closure, whereas the second hinge is made of a flexible material.

Nowadays, in trunk parcel shelves with fixed anchors, centering is achieved through interference between the parcel shelf and the lateral supports of the body, through an over-volume of the parcel shelf on the sides in contact with the lateral supports of the body.

In this way, if the over-volume is important, there exists a risk of locking the parcel shelf in the lateral support. On the contrary, if the over-volume is small, it cannot absorb all allowances and thus it may have centering problems.

On the other hand, this over-volume is located in a way that it is visible to the client or user, which is detrimental to the aesthetics.

In an embodiment, the male element consists of a horizontal cylindrical core which protrudes from each support, the cores of the two supports being aligned in a direction perpendicular to the longitudinal axis of the vehicle. Each cylindrical core has a radial housing on the upper part, from its lateral surface.

The female element can be configured as an inverted fork, comprising two arched arms which laterally surround the cylindrical core of the male element, these arms having some transverse elastic deformation capacity. The female element also includes an intermediate tenon, which protrudes between the two fork arms and in the same direction as them, said tenon being intended to be inserted tightly in the radial housing of the male element core.

With this constitution, the coupling between the male element and the female element is produced when the arms of the female element surround the core of the male element and when the tenon of the female element is inserted in the radial housing of the male element. The arms of the female element will surround the core of the male element in a width greater than 180°, so that through these arms and the tenon a junction is attained without moving capacity between the male and female elements in the directions of axes X, Y and Z.

In an embodiment, the cylindrical core of the male element has a tubular configuration and is connected to the corresponding lateral support through lower legs. Upwardly, this tubular cylinder has, from one of its wall edges, a recess which defines the housing for the tenon of the female element.

The arched arms of the fork will be opposed by the concave side thereof, their free ends being separated by a distance which is smaller than the diameter of the male element core, so that in order to mount the female element in the male element a transverse elastic deformation of the arms of the fork will be necessary until its complete coupling on the cylinder of the male element.

### Brief description of the drawings

The attached drawings show an example of an embodiment of a rear articulated parcel shelf for automobiles, constituted according to the invention. In the drawings:
Figure 1 is a perspective view of a parcel shelf constituted according to the invention, with one of the lateral supports between which it is mounted.
Figure 2 shows a frontal elevation view of one of the supports on which the panel of the parcel shelf is mounted.
Figure 3 shows a lateral elevation view of the parcel shelf, in horizontal position.
Figure 4 shows a sectional view of the parcel shelf, in a direction parallel to the longitudinal axis of the vehicle, taken according to the cutting line IV-IV of figure 1.
Figure 5 corresponds to detail L of figure 4, at greater scale.
Figure 6 shows a perspective view of the female anchor, which forms part of the parcel shelf panel.
Figure 7 shows a perspective view of the male anchor which forms part of the lateral supports.
Figure 8 is a similar view to that of figure 3, but with the front and rear bodies of the panel being lifted, with respect to the coplanar position shown in figure 3.

### Detailed description of an embodiment

The following is a more detailed description of the parcel shelf of the invention, with reference to the embodiment example shown in the aforementioned drawings.

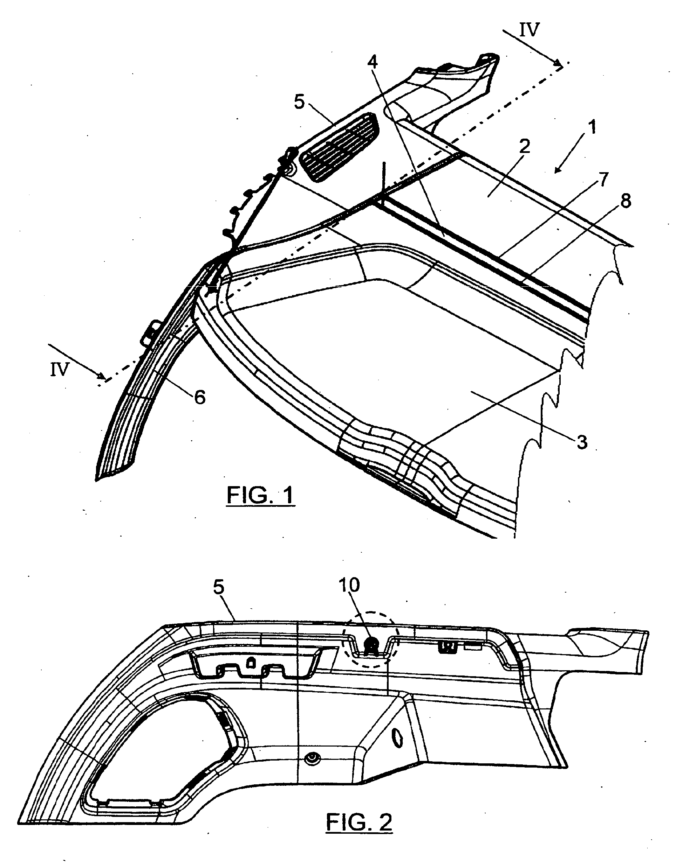

Figure 1 shows a rear parcel shelf 1 for automobiles comprising a front body 2 and a rear body 3 separated by an intermediate section 4. This parcel shelf 1 is mounted on lateral supports 5 which are fixed to the automobile body 6.

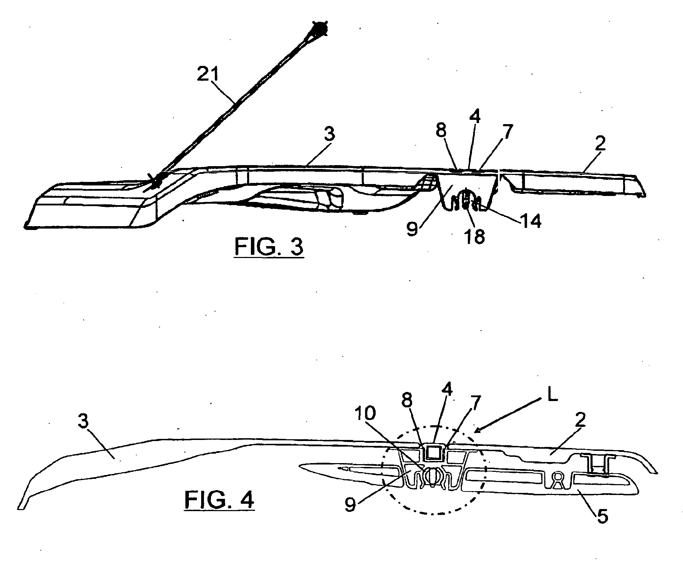

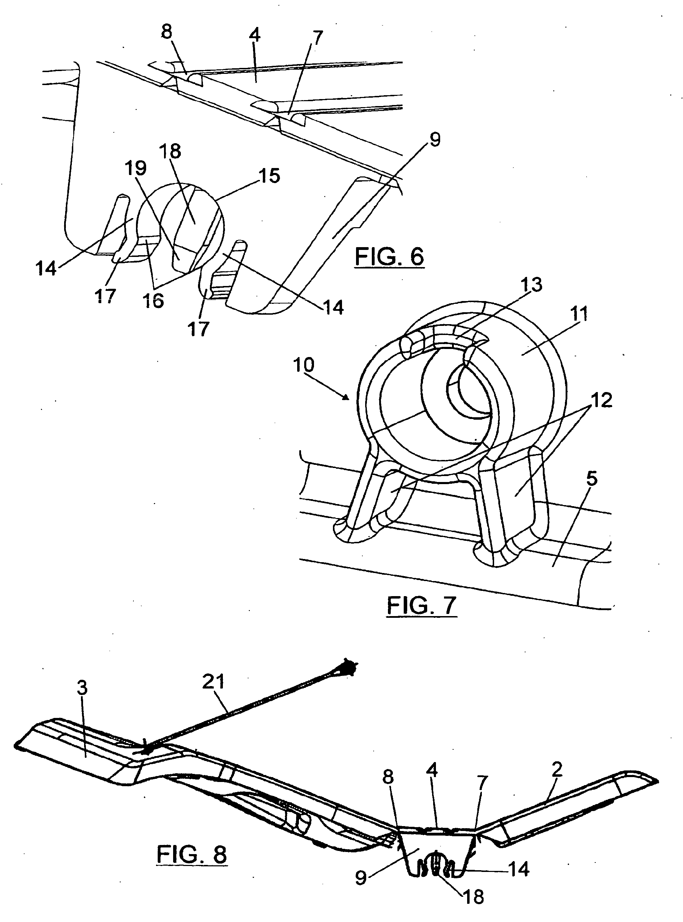

According to the invention, the front body 2 of the parcel shelf is separated from the intermediate section 4 by an articulation axis 7, while the rear body 3 of the parcel shelf is separated from the intermediate section 4 by an articulation axis 8. That is, each one of the front 2 and rear 3 bodies of the parcel shelf has its own articulation axis, around which each one of said bodies can swing independently from the other, so that both bodies can be in a coplanar horizontal position, as shown in figure 3, one of them in horizontal position and the other in a lifted position, or else both in lifted position, as shown in figure 8.

The parcel shelf 1 is mounted on lateral supports 5 through the intermediate section 4, through anchoring means which can be separated and which can prevent the movement of the parcel shelf in the directions of axes X, Y and Z.

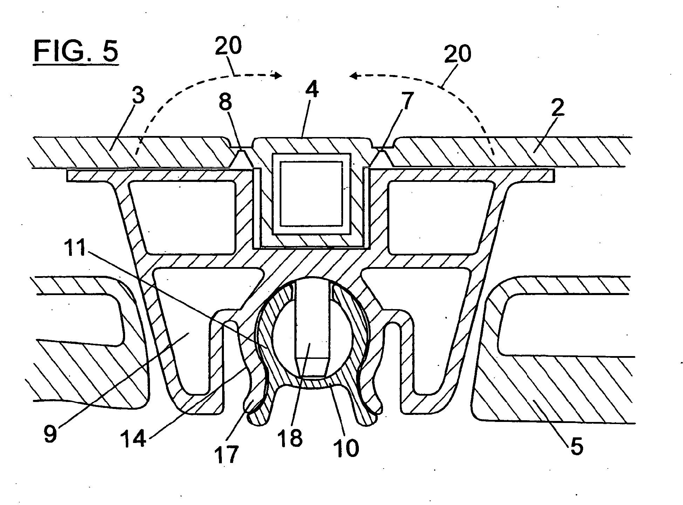

To that end, the anchoring means between the central section 4 and the lateral supports 5 comprise, at each side of the parcel shelf 1, a female element 9, figure 3, downwardly protruding from the section 4, and a male element 10, figure 2,which protrudes from each support 4 and on which the female element 9 will be fixed, as shown in figure 4 and as it can be seen in greater detail in figure 5.

As it can be seen in figures 2, 5 and 7, the male element 10 consists of a horizontal cylindrical core 11 which is joined to each support 5 by means of lower legs 12. The cylindrical cores 11 of the two supports will be aligned with each other in a direction perpendicular to the vehicle longitudinal axis. This cylindrical core, as seen in figure 7, can have a tubular configuration and it can feature a recess 13 from one of its wall edges.

The female element 9, as it can be seen better in figures 3 and 6, comprises a part which is fixed in the lower part to each end of the intermediate section 4 of the parcel shelf, said part forming from its lower edge a fork-shaped coupling with arched arms 14, opposed by the concave side and with capacity for transverse elastic deformation. These arms 14 delimit an open circular contour 15 with an angular width greater than 180° and with a diameter equal to that of the cylindrical core 11, figure 7, of the male element. The arms 14 of the female element will delimit the areas 16 which are separated from each other by a distance smaller than the diameter of the core 11 of the male element. From the areas 16 the arms 14 extend in divergent sections 17.

The female element also comprises an intermediate tenon 18 protruding between the arms 14 and in the same direction, being its transversal section approximately equal to the contour of the recess 13 of the male element 11, figure 7, and ending in a wedge-shaped end section 19.

With the constitution described and as it can be seen in figures 4 and 5, the female element 9 which protrudes downwardly at each side of the intermediate section 4 of the parcel shelf 1 is mounted on the male element 10 of each support 5. To that end, the arched arms 14 of the female element 9 rest, through the divergent end sections 17, on the cylindrical core 11 of the male element 10, and pressing upwardly it is attained, by elastic deformation, the partial separation of the arms 14, until they completely surround the cylindrical core 11. At the same time the tenon 18 of the male element is inserted through the recess 13 of the tubular body 11 of the male element 10, thus each female element being mounted and fixed into the corresponding male element 10 without possibility of movement in any of the directions of the axes X, Y and Z, due to the tight coupling of the arms 14 on the male element 10 and due to the tight insertion of the tenon 18 of the female element through the recess 13 of the male element.

As it can be seen in figure 5, the articulation axes 7 and 8 of the bodies 2 and 3 of the parcel shelf are defined by thickness reductions of said parcel shelf. In the same figure 5, the independent swinging direction of the bodies 2 and 3 is represented through dashed lines 20, on the respective articulation axes 7 and 8.

As it can be seen in figures 1 and 3, the rear body 3 of the parcel shelf can have strips 21 for its hanging in the lifted position shown in figure 8.

## Claims

1. Rear articulated parcel shelf (1) for automobiles, comprising at least one dividing line, perpendicular to the vehicle axis, which divides it into two independent parcel shelf bodies (2, 3), a front parcel shelf body (2) and a rear parcel shelf body (3), wherein the aforementioned two parcel shelf bodies (2, 3) have independent articulation axes (7, 8), on which they can swing independently between a lifted position and a folded position, in the second of which both bodies (2, 3) are in coplanar position, whose axes (7, 8) are separated by an intermediate section (4) which rests on lateral supports (5) of the automobile body (6); whose supports (5) and intermediate section (4) have releasable mutual anchoring means, capable of preventing the movement of the parcel shelf (1) in the directions of axes X, Y and Z, **characterized in that** the anchoring means between the intermediate section and the lateral supports comprise, at each side of the parcel shelf (1), a female element (9), which downwardly protrudes from the intermediate section (4) of the parcel shelf (1), and a male element (10), which protrudes from each support (5) and on which the aforementioned female element (9) is tightly fixed; and **in that** the male element (10) consists of a horizontal cylindrical core (11) protruding from each support (5), aligned on both supports (5) in a direction perpendicular to the longitudinal axis of the vehicle, whose cylindrical core (11) has in its upper part, from its lateral surface, a radial housing; and **in that** the female element (9) has the shape of an inverted fork, including two arched arms (14) which laterally surround the cylindrical core (11) of the male element (10) and ;have the capacity for elastic transverse deformation, and an intermediate tenon (18), which protrudes from both arms (14) and in the same direction, which is tightly inserted in the radial housing of said core (11).

2. Parcel shelf according to claim 1, **characterized in that** the aforementioned articulation axes (7, 8) are defined by weakening and folding lines between the central section and the front and rear bodies (2, 3) of the parcel shelf (1).

3. Parcel shelf according to claim 1, **characterized in that** the cylindrical core (11) of the male element (10) has a tubular configuration, is connected to the corresponding lateral support (5) by means of two lower legs (12) and has in its upper part and from one of its wall edges, a recess (13) defining the housing for the tenon (18) of the female element (9).

4. Parcel shelf according to claim 1, **characterized in that** the arched arms (14) of the fork are opposed on the concave side and have end areas (16) which are separated by a distance smaller than the diameter of the male element core (11).

5. Parcel shelf according to claim 1, **characterized in that** the central fork has approximately the same dimension as the contour (15) of the radial housing of the male element (10) and ends in a wedge-like section (19).

## Patentansprüche

1. Angelenkte hintere Hutablage (1) für Kraftfahrzeuge, umfassend zumindest eine zur Fahrzeugachse senkrechte Trennlinie, welche sie in zwei unabhängige Hutablagenkörper (2, 3), einen vorderen Hutablagenkörper (2) und einen hinteren Hutablagenkörper (3), trennt, wobei die beiden zuvor genannten Hutablagenkörper (2, 3) unabhängige Gelenkachsen (7, 8) haben, auf welchen sie unabhängig zwischen einer gehobenen Position und einer zusammengeklappten Position schwenken können, wobei sich in der Letzteren beide Körper (2, 3) in einer koplanaren Position befinden, wobei deren Achsen (7, 8) durch einen Zwischenabschnitt (4) getrennt sind, welcher auf seitlichen Halterungen (5) der Karosserie (6) ruht; wobei die Halterungen (5) und der Zwischenabschnitt (4) lösbare gegenseitige Verankerungsmittel haben, welche eine Bewegung der Hutablage (1) in Richtung der Achsen X, Y. und Z verhindern können, **dadurch gekennzeichnet, dass** die Verankerungsmittel zwischen dem Zwischenabschnitt und den seitlichen Halterungen an jeder Seite der Hutablage (1) ein Buchsenelement (9), welches vom Zwischenabschnitt (4) der Hutablage (1) nach unten vorsteht, und ein Steckelement (10), welches von jeder Halterung (5) vorsteht und auf welchem das zuvor genannte Buchsenelement (9) fest befestigt ist, umfassen; und dass das Steckelement (10) aus einem horizontalen Zylinderkern (11) besteht, der von jeder Halterung (5) vorsteht und auf beiden Halterungen (5) in einer zur Längsachse des Fahrzeugs senkrechten Richtung angeordnet ist, wobei der Zylinderkern (11) an seinem oberen Teil von seiner Seitenfläche ein radiales Gehäuse hat; und dass das Buchsenelement (9) die Form einer umgekehrten Gabel hat, einschließlich zwei gekrümmter Arme (14), welche den Zylinderkern (11) des Steckelements (10) seitlich umgeben und elastisch in Querrichtung verformbar sind, und einen Zwischenzapfen (18), welcher von beiden Armen (14) und in der gleichen Richtung vorsteht, und welcher fest in das radiale Gehäuse des genannten Kerns (11) eingeführt ist.

2. Hutablage nach Anspruch 1, **dadurch gekennzeichnet, dass** die zuvor genannten Gelenkachsen (7, 8) durch Schwächungs- und Klapplinien zwischen dem mittleren Abschnitt und dem vorderen und hinteren Körper (2, 3) der Hutablage (1) definiert sind.

3. Hutablage nach Anspruch 1, **dadurch gekennzeichnet, dass** der Zylinderkern (11) des Steckelements eine röhrenförmige Ausbildung hat, mit der entsprechenden seitlichen Halterung (5) durch zwei untere Schenkel (12) verbunden ist und in seinem oberen Teil und von einer seiner Wandecken eine Einkerbung (13) hat, welche das Gehäuse für den Zapfen (18) des Buchsenelements (9) definiert.

4. Hutablage nach Anspruch 1, **dadurch gekennzeichnet, dass** die gekrümmten Arme (14) der Gabel sich auf der konkaven Seite gegenüberliegen und Endbereiche (16) haben, welche durch einen Abstand getrennt sind, der kleiner als der Durchmesser des Steckelementkerns (11) ist.

5. Hutablage nach Anspruch 1, **dadurch gekennzeichnet, dass** die zentrale Gabel ungefähr dieselbe Abmessung wie der Umriss (15) des radialen Gehäuses des Steckelements (10) hat und in einem keilartigen Abschnitt (19) endet.

## Revendications

1. Plage arrière articulée (1) pour automobiles, comprenant au moins une ligne de division, perpendiculaire à l'axe de véhicule, qui la divise en deux corps de plage indépendants (2, 3), un corps de plage, avant (2) et un corps de plage arrière (3), dans laquelle lesdits deux corps de plage (2, 3) ont des axes d'articulation indépendants (7, 8), sur lesquels ils peuvent basculer indépendamment entre une position élevée et une position pliée dans la deuxième desquelles les deux corps (2, 3) sont en position coplanaire, dont les axes (7, 8) sont séparés par une section intermédiaire (4) qui repose sur des supports latérales (5) du corps d'automobile (6), dont les supports (5) et la section intermédiaire (4) ont des moyens d'ancrage mutuels amovibles, aptes à prévenir le mouvement de la plage (1) dans les directions des axes X, Y et Z, **caractérisée en ce que** les moyens d'ancrage entre la section intermédiaire et les supports latéraux comprennent, de chaque côté de la plage (1), un élément femelle (9) qui fait saillie vers le bas de la section intermédiaire (4) de la plage (1), et un élément mâle (10) qui fait saillie de chaque support (5) et sur lequel ledit élément femelle (9) est fixé fermement; et **en ce que** l'élément mâle (10) consiste en un noyau cylindrique horizontal (11) qui fait saillie de chaque support (5), aligné sur les deux support (5) dans une direction perpendiculaire à l'axe longitudinal du véhicule, dont le noyau cylindrique (11) a sur sa partie supérieure, à partir de sa surface latérale, un logement radial ; et **en ce que** l'élément femelle (9) a la forme d'une fourche reversée, comprenant deux bras arqués (14) qui entourent latéralement le noyau cylindrique (11) de l'élément mâle (10) et possèdent la capacité de déformation transversale élastique, et un tenon intermédiaire (18), qui fait saillie des deux bras (14) et dans la même direction, qui est inséré fermement dans le logement radial dudit noyau (11).

2. Plage selon la revendication 1, **caractérisée en ce que** lesdits axes d'articulation (7, 8) sont définis par des lignes d'affaiblissement et de pliage entre la section centrale et les corps avant et arrière (2, 3) de la plage (1).

3. Plage selon la revendication 1, **caractérisée en ce que** le noyau cylindrique (11) de l'élément mâle (10) a une configuration tubulaire, est connecté au support latéral correspondant (5) au moyen de deux pattes inférieures (12) et a sur sa partie supérieure et à partir d'un de ses bords de paroi, un évidemment (13) qui défini le logement pour le tenon (18) de l'élément femelle.(9).

4. Plage selon la revendication 1, **caractérisée en ce que** les bras arqués (14) de la fourche sont opposés sur le côté concave et ont des zones d'extrémité (16) qui sont -séparées par une distance inférieure au diamètre du noyau de l'élément mâle (11).

5. Plage selon la revendication 1, **caractérisée en ce que** la fourche centrale a environ la même dimension que le contour (15) du logement radial de l'élément mâle (10) et termine en une section en biseau (19).
